# EUROPEAN PATENT SPECIFICATION

(11) **EP 4 404 239 B1**
(45) Date of publication and mention of the grant of the patent: **18.11.2026**
(21) Application number: 24179261.3
(22) Date of filing: 30.03.2021
(51) Int. Cl.: G01N 27/622, H01J 49/00, G01N 27/623

(54) **COUNTERFLOW UNIFORM-FIELD ION MOBILITY SPECTROMETER**
GEGENSTROM-IONENMOBILITÄTSSPEKTROMETER MIT HOMOGENEM FELD
SPECTROMÈTRE DE MOBILITÉ IONIQUE À CHAMP UNIFORME À CONTRE-COURANT

(30) Priority: 03.04.2020 US 202016840044
(43) Date of publication of application: 24.07.2024
(62) Document number(s) of the earlier application(s) in accordance with Art. 76 EPC: 21165873.7 / 3 889 595
(73) Proprietor: Thermo Finnigan LLC, San Jose, CA 95134 (US)
(72) Inventor: KOVTOUN, Viatcheslav V., Boise, 83709 (US)
(74) Representative: Boult Wade Tennant LLP

(56) References cited:
- WO-A1-2019/157596
- US-A1- 2012 273 674
- US-B1- 6 630 662

## Description

### FIELD

The present disclosure generally relates to the field of ion chromatography including counterflow uniform-field ion mobility spectrometers.

### INTRODUCTION

Ion-mobility spectrometry (IMS) is an analytical technique used to separate and identify ionized molecules in the gas phase based on their mobility in a carrier buffer gas. IMS instruments can be extremely sensitive stand-alone devices, but are often coupled with mass spectrometry, gas chromatography or high-performance liquid chromatography in order to achieve a multi-dimensional separation.

IMS can be used in the source region of modern mass spectrometers to provide an additional dimension of separation based on the ions' shape and size (collisional cross section, CCS). It can be coupled with nearly any mass analyzer through either the standard mode of operation for beam-type instruments or selective accumulation mode when used with trapping mass spectrometry (MS) instruments.
WO2019/157596 relates to an ion mass spectrometer that has an ion channel shaped to modify the speed of a carrier gas as the carrier gas traverses the ion channel.

### SUMMARY

In a first aspect, there is provided an ion mobility device as set out in claim 1. can include a plurality of electrodes and a current source.

In various embodiments of the first aspect, the gas flow can be constant during the trapping and equilibration time period and the ejection time period.

In various embodiments of the first aspect, at least a subset of the plurality of electrodes can have a decreasing length or diameter going in the direction from the second end to the first end.

In a second aspect, there is provided a method as set out in claim 5.

In various embodiments of the second aspect, the method can further include ionizing a sample to produce the ions.

In various embodiments of the second aspect, the method further includes analyzing the ions after the ions are ejected.

In various embodiments of the second aspect, the gas flow can be uniform.

In various embodiments of the second aspect, the plurality of electrodes can form a channel of variable cross section.

In a third aspect, there is provided a mass spectrometer as set out in claim 4 that includes an ion source configured to ionize a sample to produce ions; an ion mobility device, and a mass analyzer configured to analyze the ions.

In various embodiments of the third aspect, the gas flow can be constant during the equilibration/trapping time period and the ejection time period.

In various embodiments of the third aspect, at least a subset of the plurality of electrodes can have a decreasing length or diameter going in the direction from the second end to the first end.

### DRAWINGS

For a more complete understanding of the principles disclosed herein, and the advantages thereof, reference is now made to the following descriptions taken in conjunction with the accompanying drawings, in which:
Figure 1 is a block diagram of an exemplary mass spectrometry system, in accordance with various embodiments.
Figures 2A and 2B illustrate the operation of a prior art Trapping Ion Mobility Separator (TIMS) device.
Figures 3A and 3B separation of ions in a TIMS device, in accordance with various embodiments.
Figure 4 illustrates an exemplary method of operating a TIMS device, in accordance with various embodiments.
Figures 5A and 5B illustrate an exemplary TIMS device having a variable cross section, in accordance with various embodiments.
Figures 6 and 7 illustrate exemplary TIMS devices having a constant cross section and a variable mass flow.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

### DESCRIPTION OF VARIOUS EMBODIMENTS

Embodiments of systems and methods for ion separation are described herein.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

### MASS SPECTROMETRY PLATFORMS

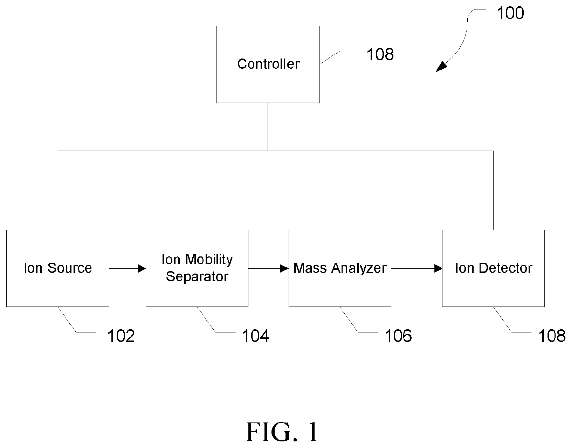

Various embodiments of mass spectrometry platform 100 can include components as displayed in the block diagram of Figure 1. In various embodiments, elements of Figure 1 can be incorporated into mass spectrometry platform 100. According to various embodiments, mass spectrometer 100 can include an ion source 102, an ion mobility separator 104 , a mass analyzer 106, an ion detector 108, and a controller 110.

In various embodiments, the ion source 102 generates a plurality of ions from a sample. The ion source can include, but is not limited to, a matrix assisted laser desorption/ionization (MALDI) source, electrospray ionization (ESI) source, atmospheric pressure chemical ionization (APCI) source, atmospheric pressure photoionization source (APPI), inductively coupled plasma (ICP) source, electron ionization source, chemical ionization source, photoionization source, glow discharge ionization source, thermospray ionization source, and the like.

In various embodiments, the ion mobility separator 104 can separate ions based on an ion mobility within a gas. For example, the ion mobility separator 104 can be a drift tube, a traveling wave IMS, a TIMS, field asymmetric ion mobility spectrometer (FAIMS), and the like. In various embodiments, the ion mobility separator can receive ions from the ion source 102 and provide an additional dimension of separator prior to the mass analyzer 106.

In various embodiments, the mass analyzer 106 can separate ions based on a mass-to-charge ratio of the ions. For example, the mass analyzer 106 can include a quadrupole mass filter analyzer, a quadrupole ion trap analyzer, a time-of-flight (TOF) analyzer, an electrostatic trap (e.g., Orbitrap) mass analyzer, Fourier transform ion cyclotron resonance (FT-ICR) mass analyzer, and the like. In various embodiments, the mass analyzer 106 can also be configured to fragment the ions using collision induced dissociation (CID) electron transfer dissociation (ETD), electron capture dissociation (ECD), photo induced dissociation (PID), surface induced dissociation (SID), and the like, and further separate the fragmented ions based on the mass-to-charge ratio. In various embodiments, the mass analyzer 106 can be a hybrid system incorporating one or more mass analyzers and mass separators coupled by various combinations of ion optics and storage devices. For example, a hybrid system can a linear ion trap (LIT), a high energy collision dissociation device (HCD), an ion transport system, and a TOF.

In various embodiments, the ion detector 108 can detect ions. For example, the ion detector 108 can include an electron multiplier, a Faraday cup, and the like. Ions leaving the mass analyzer can be detected by the ion detector. In various embodiments, the ion detector can be quantitative, such that an accurate count of the ions can be determined. In various embodiments, such as with an electrostatic trap mass analyzer, the mass analyzer detects the ions, combining the properties of both the mass analyzer 106 and the ion detector 108 into one device.

In various embodiments, the controller 110 can communicate with the ion source 102, the ion mobility separator 104, the mass analyzer 106, and the ion detector 108. For example, the controller 110 can configure the ion source 102 or enable/disable the ion source 102. Further, the controller 110 can configure the ion mobility separator 104 to select a particular range of ion mobilities. Additionally, the controller 110 can configure the mass analyzer 106 to select a particular mass range to detect. Further, the controller 110 can adjust the sensitivity of the ion detector 108, such as by adjusting the gain. Additionally, the controller 110 can adjust the polarity of the ion detector 108 based on the polarity of the ions being detected. For example, the ion detector 108 can be configured to detect positive ions or be configured to detected negative ions.

### TRAPPED ION MOBILITY SPECTROSCOPY

Trapped ion mobility spectrometry (TIMS) inverts the separation principle of classical drift tube ion mobility. Ions entering the TIMS device are positioned in an electric field by the drag of a gas flow. The ions become trapped at an equilibrium position where the force of the electric field and the force of the drag of the gas flow are balanced. In TIMS, ions are held stationary (or trapped) in a flowing buffer gas by an axial electric field gradient (EFG) profile while the application of radio frequency (rf) potentials results in trapping in the radial dimension.

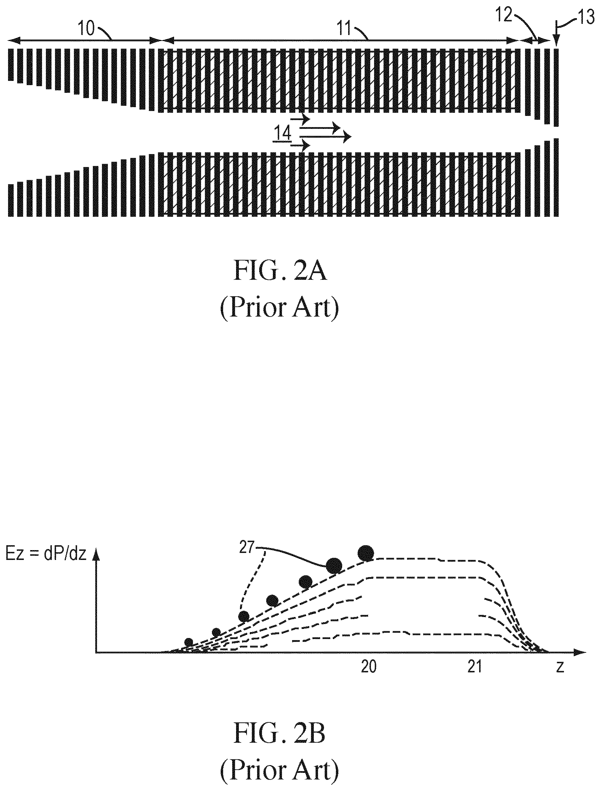

U.S. Pat. No. 7,838,826 B1 (M. A. Park, 2008) discloses a trapped ion mobility spectrometer based upon moving gases driving ions over an electric counter-field barrier. The apparatus and its operation are schematically illustrated in FIGS. 2A and 2B. FIG. 2A shows a closed quadrupole device (11), vertically sliced into thin electrodes forming a circular tube arranged around the z-axis of the device. The electrode slices are separated by insulating material closing the gaps between the electrodes around the tube to make the tube gas-tight. The differential pumping system of a mass spectrometer (not shown), surrounding the ion mobility spectrometer, is dimensioned to cause a gas to flow through the tube in a positive x direction. Ions entering the first part (10) of the funnel together with the gas are collisionally focused onto the axis of the tube (11) and move, driven by the gas, along the axis of the tube towards its exit through the apertured diaphragm (13). Most of the gas escapes through gaps between the electrodes of the funnel part (12).

FIGS. 2B shows different field barriers of the electric counter field Ez=dP/dz along the z-axis. The operation of the device starts with a filling process. The ions (27) are blown by the gas flow against the field barrier and are stopped because they cannot surmount the field barrier. Ions with high mobility (small cross section) gather at the foot of the barrier, ions with low mobility gather (large cross section) near the summit, as symbolically indicated by the size of the dots for the ions (27). Then, for a spectrum acquisition, the potential profile (22) is smoothly lowered by decreasing the voltage continuously in a procedure denominated as a "scan" (28), passing through profile states (23) to (26). During the scan, ions of higher and higher mobilities can surmount the decreasing summit of the barrier and exit the ion mobility spectrometer.

As shown in FIG. 2B, a characteristic feature of this instrument is the long increasing part of the electric field barrier until position (20), the start of the plateau. This long ascent between foot and top of the barrier collects the ions (27) in a rather large volume along the z-axis, reducing greatly any space charge effects.

An ion's drift velocity *v_{d}* is a function of ion mobility *K* and electric field strength *E*, *v_{d} = KE.* An ion becomes trapped within an TIMS device when the total velocity falls to 0, *v = v_{g}* + *v_{d}* = 0.

Ion mobility for a particular ion K(m) is a function of temperature T and pressure p within the TIMS, $K \left(m\right) = {K}_{0} \left(m\right) \frac{T}{{T}_{0}} \frac{{p}_{0}}{p}$ where T₀ and p₀ are standard temperature and pressure. The ion mobility K(m) within the TIMS can be simplified to a function of pressure and temperature $K \left(m\right) = {K}_{0}^{′} \left(m\right) ∗ p / T$*.* Thus, with a constant*E*, the ion velocity can change with location v(x) when the pressure changes with location *p*(*x*) and the ion can become trapped at a position along the length of the TIMS device when *v*(*x*)=0.

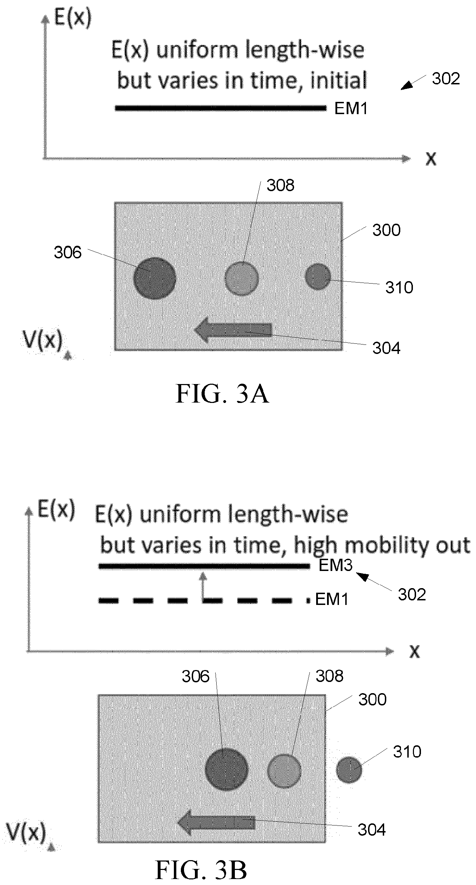

Figure 3A illustrates ions trapped in a TIMS device 300. In contrast to the prior art device of U.S. Pat. No. 7,838,826 B1, the TIMS device 300 has a constant electric field 302 and a gas flow 304 directed in the negative x direction. With the constant electric field 302 of magnitude Eₘ₁ along the length of the TIMS device 300 and the gas flow 304 directed in a negative x direction, low mobility ions 306, medium mobility ions 308, and high mobility ions 310 can be separated with increasing ion mobility in the positive x direction.

In various embodiments, *K*(*m*) can be changed as a function of position within the TIMS device by varying the cross-section as a function of position *S*(*x*)*.* For a given mass flow of gas Q, ${ρ}_{1} {v}_{g 1} {S}_{1} = {p}_{2} {v}_{g 2} {S}_{2} = Q$ , where *ρ*₁, *v*_{*g*1}, and *S*₁ are the density, velocity, and cross section, respectively, at a first location and *ρ*₂*, v*_{g2}, and *S*₂ are the density, velocity, and cross section, respectively, at a second location. Thus, at the trapping position x, *v_{g}*(*x*) + *v_{d}* (*x*) *=* 0.: ${v}_{d} \left(x\right) = K \left(m\right) ∗ E = {K}_{0} \left(m\right) ∗ \frac{E}{ρ} = {K}_{0}^{′} \left(m\right) ∗ {v}_{g} \left(x\right) ∗ S \left(x\right) ∗ \frac{E}{Q}$

Cancelling velocity in both parts of equation results in relation ${K}_{0}^{′} \left(m\right) = const / \left(E∗S\left(x\right)\right)$

Ions having specific value of ${K}_{0}^{′} \left(m\right)$ will occupy x position based on this relation.

As the gas velocity is greater in regions with a smaller cross section of the TIMS device, separating of ions as a function of ion mobility can be accomplished by having a largest cross section near an first end and decreasing the cross section as the ion nears the second end.

In other embodiments, *K(m)* can be changed as a function of position within the TIMS device with a constant cross-section S by varying the mass flow *Q(x).* For a given cross section, *Q(x)= ρ(x)* v_{g} (x) *S.* Thus ${v}_{d} \left(x\right) = K \left(m\right) ∗ E = {K}_{0} \left(m\right) ∗ E / ρ \left(x\right) = {K}_{0}^{′} \left(m\right) ∗ {v}_{g} \left(x\right) ∗ E / Q \left(x\right)$ *.* Assuming *v_{d}*(*x*) = *-v_{d}*(*x*)*,* the equation reduces to ${K}_{0}^{′} \left(m\right) = Q \left(x\right) / E / S$*.* When trapped, ions with specific value of ${K}_{0}^{′} \left(m\right)$ will occupy position on x axis based on the local value of Q(x). The gas velocity can change with the mass flow of the TIMS device. That is, the gas velocity decreases with decreasing mass flow within the TIMS device. In various embodiments, the gas flow can decrease along the direction of gas flow by providing flow paths out of TIMS device. To separate ions according to ion mobility, a gas flow can be supplied near an ion exit end with flow paths out of the device along the length so that the lowest mass flow is near the first end and the highest mass flow is near the second end.

Once the ions have settled into their equilibrium positions, the ions can be released from the device by increasing the electric field to a second magnitude Eₘ₂ to increase the ion velocity while the gas flow remains the same. All target ions can exit the TIMS device provided the electric field is high enough that the velocity is positive for all target ions for the length of the device.

Figure 3B illustrates ions exiting the TIMS device 300 after the electric field 302 is increased from Eₘ₁ to Eₘ₂. The high mobility ions 310 can exit the TIMS device first, followed by the medium mobility ions 308 and then the low mobility ions 306.

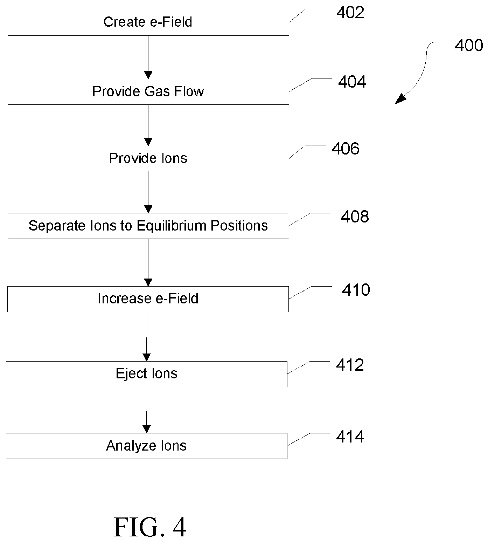

Figure 4 illustrates a method 400 of operating an ion mobility separator. At 402, an electric field can be created within the ion mobility separator. The electric field can be generated by applying an electrical (DC) potential to electrode along the length of the ion mobility separator. The electric field can be constant along the length of the ion mobility separator and can be set to a first magnitude Eₘ₁ during a trapping and equilibration time period.

At 404, a gas flow can be provided near a second end of the ion mobility separator. The gas flow entering the ion mobility separator can be constant throughout the operation of the ion mobility separator.

At 406, ions from a plurality of analytes can be introduced into the TIMS device near a first end. The ions can have a range of ion mobilities, such as depending on the identity of the analyte. At 408, the ions can be separated according to ion mobility. The TIMS device can be configured such that an ion can reach an equilibrium position v(x)=0 at some point along the length of the TIMS device according to ion mobility. In various embodiments, the position dependence can be accomplished by a change in cross section along the length of the ion mobility separator, such that near the first end has a larger cross section than near the second end. Alternatively, the position dependence can be accomplished by varying the mass flow within the ion mobility separator, such as by providing gas flow paths for gas to escape along the length of the TIMS device. The ions can be separated such that low mobility ions are closer to the first end and high mobility ions are closer to the second end.

At 410, the electric field can be increased, and at 412 the ions can be ejected from the TIMS device. The high mobility ions can be ejected first due to their proximity to the second end, while ions of decreasing ion mobility follow.

At 414, the ions can be analyzed, such as by using a mass spectrometer.

### VARIABLE CROSS SECTION

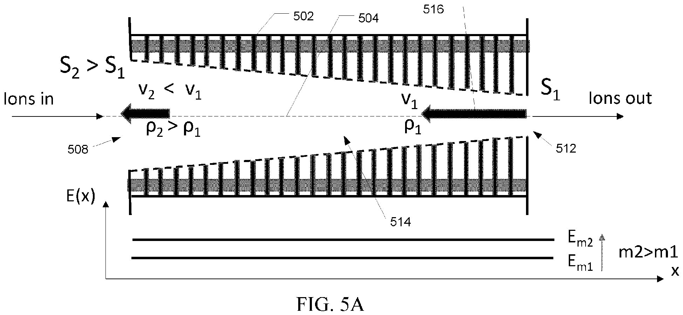

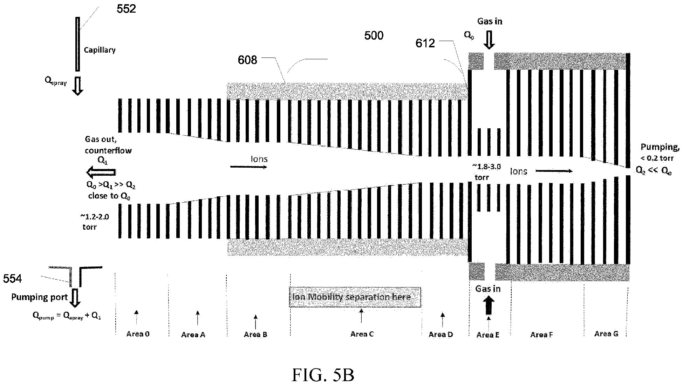

Figures 5A and 5B illustrate embodiments of an ion mobility separator 500 with a variable cross section. In Figure 5A, ion mobility separator 500 can include a plurality of electrodes 502, such as ring electrodes, arranged along an axis 504. Ion mobility separator 500 can have a first end 508 and a second end 512. The electrodes 502 can be arranged such that a channel 514 is formed with a cross-section (S) that decreases from the first end to the second end (positive X direction).

An electric potential can be applied to the electrodes 502 to create a uniform electric field. The electric field can push ions in the positive X direction from the first end 508 to the second end 512.

A gas flow 516 can be supplied at the second end and flow in the direction of the first end (negative X direction). Due to the geometry of the ion mobility separator 500 and the change in cross section, the velocity of the gas can decrease as the gas moves from the second (narrow) end to the first (wide) end, resulting in a variable drag force along the ion mobility separator 500, with a lower drag force at the first end and a high drag force at the second end.

During a trapping and equilibration time period, the electric field can be set at a first magnitude Eₘ₁ such that v(x)=0 for target ions at some point along the length of the ion mobility separator 500. With the ions experiencing a constant e-field force and the decreasing cross section from the first end 508 towards the second end 512, the ions can become trapped at the location dependent on the ion mobility. Ions with higher mobility can advance closer to the second end 512 before becoming trapped. Thus, ions can be separated from lowest ion mobility near the first end 508 to highest ion mobility near the second end 512.

During an ejection time period, the electric field can be set at a second magnitude Eₘ₂ such v(x)>0 throughout the ion mobility separator for all target ions. This can drive the ions of interest through the second end 512 while maintaining the separation based on ion mobility. In alternative embodiments, the electric field can be ramped through a least a portion of the difference between the first magnitude Eₘ₁ to the second magnitude Eₘ₂. In particular embodiments, the electric field can jump from Eₘ₁ to a level slightly below the level corresponding to the highest ion mobility ions of interest and then ramped through the range of ion mobilities of interest to Eₘ₂.

Figure 5B illustrates the ion mobility separator 500 in the context of the broader system 550. Sample can be introduced through capillary 552 and ions can be formed. The ions can be drawn into the device using an electric field in area 0. Area 0 has an open geometry with a constant cross section to accept ions. The ions can then move to an ion funnel in area A to focus the ions. Area B has a constant cross section before entering the ion mobility separator 500 in area C. After the ions have been separated based on the mobility of the ions, they pass through areas D, E and F before additional focusing in a second ion funnel of area G. After exiting area G, ions can proceed to a mass analyzer for further analysis.

The gas flow can be introduced in area E. The bulk of the gas flow can flow through the areas D, C, B, A, and 0 until it is removed from the system by pumping port 554.

### VARIABLE MASS FLOW

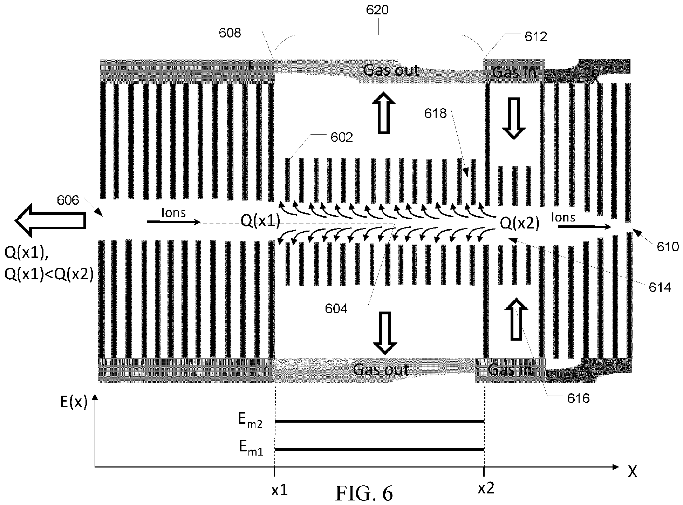

Figure 6 illustrates examples that are not according to the invention of an ion mobility separator 600 with a constant cross section and a variable mass flow. Ion mobility separator 600 can include a plurality of electrodes 602, such as ring electrodes, arranged along an axis 604. Ion mobility separator 600 can have an ion entrance 608 and an ion exit 610. The electrodes 602 can be arranged such that a channel 614 is formed with a constant cross-section (S).

An electric potential can be applied to the electrodes 602 to create a uniform electric field. The electric field can push ions in the positive X direction from the ion entrance 606 to the ion exit 610.

A gas flow 616 can be supplied near a second end 612 of a mobility separation region 620 and flow in the direction of the first end 608 of the mobility separation region 620 (negative X direction). Gas flow paths 618 can be provided within a mobility separation region 620, such as between electrodes 602, so that a portion of gas flow 616 can exit the ion mobility separator 600. Within the mobility separation region 620, the electrodes can be uniform and have a similar length or outer diameter to provide gas flow paths 618 of similar length. The similar length of gas flow paths 618 can provide similar restriction on the gas flow. The decrease in mass flow in the negative x direction due to the loss of a portion of the gas can result in a variable drag force along the ion mobility separator 600, with a lower drag force at the first end and a high drag force at the second end.

During a trapping and equilibration time period, the electric field can be set at a first magnitude Eₘ₁ such that v(x)=0 for all target ions at some points along the length of the ion mobility separator 620. With the ions experiencing a constant e-field force and the increasing mass flow from the first end 608 of device 620 towards the second end 612 of device 620, the ions can become trapped at the location dependent on the ion mobility. Ions with higher mobility can advance closer to the second end 612 of device 620 before becoming trapped. Thus, ions can be separated from lowest ion mobility near the first end 608 of device 620 to highest ion mobility near the second end 612 of device 620.
During an ejection time period, the electric field can be set at a second magnitude Eₘ₂ such v(x)>0 throughout the ion mobility separator for all target ions. This can drive the ions through the second end 612 while maintaining the separation based on ion mobility. In alternative embodiments, the electric field can be ramped through a least a portion of the difference between the first magnitude Eₘ₁ to the second magnitude Eₘ₂. In particular embodiments, the electric field can jump from Eₘ₁ to a level slightly below the level corresponding to the highest ion mobility ions of interest and then ramped through the range of ion mobilities of interest to Eₘ₂.

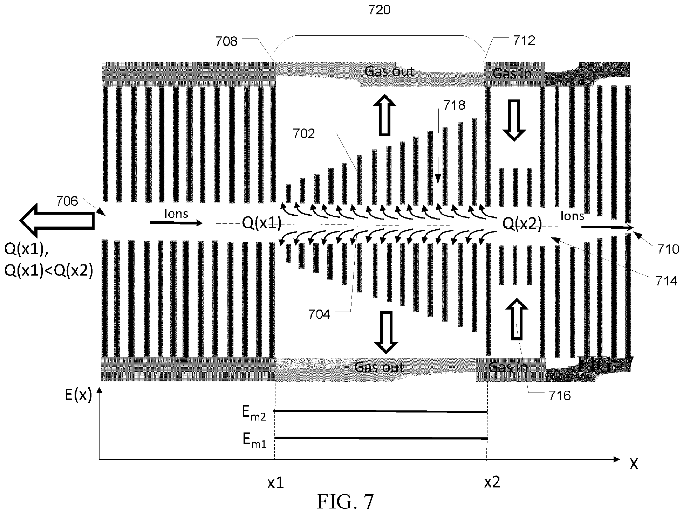

Figure 7 illustrates another example that is not according to the present invention of an ion mobility separator 700 with a constant cross section and a variable mass flow. Ion mobility separator 700 can include a plurality of electrodes 702, such as ring electrodes, arranged along an axis 704. Ion mobility separator 700 can have an ion entrance 706 and an ion exit 710. The electrodes 702 can be arranged such that a channel 714 is formed with a constant cross-section (S).

An electric potential can be applied to the electrodes 702 to create a uniform electric field. The electric field can push ions in the positive X direction from the ion entrance 706 to the ion exit 710.

A gas flow 716 can be supplied near a second end 712 of an ion mobility separation region 720 and flow in the direction of the first end 708 of the ion mobility separation region 720 (negative X direction). Gas flow paths 718 can be provided within the ion mobility separation region 720, such as between electrodes 702, so that a portion of gas flow 716 can exit the ion mobility separator 700. Within the mobility separation region 720, the electrodes can have variable lengths or outer diameters to provide gas flow paths 718 of different length. The different lengths of gas flow paths 718 can provide varying restriction on the gas flow. The decrease in mass flow in the negative x direction due to the loss of a portion of the gas can result in a variable drag force along the ion mobility separator 700, with a lower drag force at the first end and a high drag force at the second end.

In contrast to Figure 6 where the restriction on the flow paths are constant along the length of the TIMS device, the restriction on the flow paths in Figure 7 vary along the length of the TIMS device, with a higher restriction near the second end 712 with the higher pressure. Since the amount of gas flow out through each flow path is a function of both pressure and restriction, the mass flow profile can be adjusted by varying the length/outer diameter of the electrodes.

During a trapping and equilibration time period, the electric field can be set at a first magnitude Eₘ₁ such that v(x)=0 for all target ions at some points along the length of the ion mobility separator 700. With the ions experiencing a constant e-field force and the increasing mass flow from the first end 708 towards the second end 712, the ions can become trapped at the location dependent on the ion mobility. Ions with higher mobility can advance closer to the second end 712 before becoming trapped. Thus, ions can be separated from lowest ion mobility near the first end 708 to highest ion mobility near the second end 712.

During an ejection time period, the electric field can be set at a second magnitude Eₘ₂ such v(x)>0 throughout the ion mobility separator for all target ions. This can drive the ions through the second end 712 while maintaining the separation based on ion mobility. In alternative embodiments, the electric field can be ramped through a least a portion of the difference between the first magnitude Eₘ₁ to the second magnitude Eₘ₂. In particular embodiments, the electric field can jump from Eₘ₁ to a level slightly below the level corresponding to the highest ion mobility ions of interest and then ramped through the range of ion mobilities of interest to Eₘ₂.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the scope of the various embodiments

## Claims

1. An ion mobility device (500) having a first end (508) for receiving ions and a second end (512) for ejecting ions, the ion mobility device comprising:
a gas flow supply configured to provide a gas flow near the second end;
a plurality of electrodes (502) arranged along an axis (504), the axis extending from the first end (508) to the second end (512), the plurality of electrodes (502) configured to receive the gas flow near the second end, wherein the plurality of electrodes form a channel (514) having a cross section that increases from the second end (512) to the first end (508) to provide for an expansion of the gas flow from the second end (512) to the first end (508) such that a first gas velocity at the second end is greater than a second gas velocity at the first end (508);
a current source configured to:
apply a first potential to the plurality of electrodes (502) to generate a first electric field during a trapping and equilibration time period, the first electric field being uniform along the length of the axis (504);
apply a second potential to the electrodes (502) during an ejection time period to generate a second electric field, the second electric field being uniform along the length of the axis (504) from the first end (508) to the second end (512) and being greater than the first electric field;
such that, in use, during the trapping and equilibration time period, ions are separated along the axis based on their ion mobility to equilibrium positions where the force applied by the electric field balances the drag force applied by the gas flow; and
during the ejection time period, ions are driven out the second end (512) by the second electric field such that the separation achieved during the trapping and equilibration time period is maintained.

2. The ion mobility device (500) of claim 1 wherein the gas flow is constant during the trapping and equilibration time period and the ejection time period.

3. The ion mobility device (500) of any preceding claim, wherein at least a subset of the plurality of electrodes (502) have a decreasing length or diameter going in the direction from the second end (512) to the first end (508).

4. A mass spectrometer (100) comprising:
an ion source (102) configured to ionize a sample to produce ions;
the ion mobility device (500) of any of the preceding claims; and
a mass analyzer (106) configured to analyze the ions.

5. A method comprising:
providing ions to an first end (508) of an ion mobility device (500), the ion mobility device including a plurality of electrodes (502) arranged along an axis (504), the axis (504) extending from a first end (508) to a second end (512);
providing a gas flow near the second end (512) of the ion mobility device, the plurality of electrodes (502), wherein the plurality of electrodes (502) forms a channel (514) having a cross section that increases from the second end (512) to the first end (508) to provide for an expansion of the gas flow from the second end (512) to the first end (508) such that a gas flow velocity decreases from the second end (512) to the first end (508);
applying an electric field at a first magnitude in a direction counter to the gas flow, the electric field being uniform along the axis (504);
separating ions to equilibrium positions along the axis (504) based on their ion mobility, the equilibrium positions being where the force applied by the electric field balances the drag force applied by the gas flow;
ejecting ions from the second end by increasing the electric field to a second magnitude.

6. The method of claim 5 further comprising ionizing a sample to produce the ions.

7. The method of claim 5 or claim 6, further comprising analyzing the ions after the ions are ejected.

8. The method of any one of claims 5-7, wherein at least a subset of the plurality of electrodes (502) have a decreasing length or diameter going in the direction from the second end (512) to the first end (508).

## Patentansprüche

1. Ionenmobilitätsvorrichtung (500), die ein erstes Ende (508) zum Empfangen von Ionen und ein zweites Ende (512) zum Ausstoßen von Ionen aufweist, die Ionenmobilitätsvorrichtung umfassend:
eine Gasströmungsversorgung, die konfiguriert ist, um eine Gasströmung in der Nähe des zweiten Endes bereitzustellen;
eine Vielzahl von Elektroden (502), die entlang einer Achse (504) angeordnet sind, wobei sich die Achse von dem ersten Ende (508) zu dem zweiten Ende (512) erstreckt, wobei die Vielzahl von Elektroden (502) konfiguriert ist, die Gasströmung nahe dem zweiten Ende aufzunehmen, wobei die Vielzahl von Elektroden einen Kanal (514) bildet, der einen Querschnitt aufweist, der von dem zweiten Ende (512) zu dem ersten Ende (508) zunimmt, um eine Ausdehnung der Gasströmung von dem zweiten Ende (512) zu dem ersten Ende (508) bereitzustellen, sodass eine erste Gasgeschwindigkeit an dem zweiten Ende größer als eine zweite Gasgeschwindigkeit an dem ersten Ende (508) ist;
eine Stromquelle, die konfiguriert ist zum:
Anlegen eines ersten Potentials an die Vielzahl von Elektroden (502), um ein erstes elektrisches Feld während einer Einfangs- und Gleichgewichtszeitspanne zu erzeugen, wobei das erste elektrische Feld entlang der Länge der Achse (504) gleichmäßig ist;
Anlegen eines zweiten Potentials an die Elektroden (502) während einer Ausstoßzeitspanne, um ein zweites elektrisches Feld zu erzeugen, wobei das zweite elektrische Feld entlang der Länge der Achse (504) von dem ersten Ende (508) zu dem zweiten Ende (512) gleichmäßig ist und größer als das erste elektrische Feld ist;
derart, dass, in Verwendung, während der Einfangs- und Gleichgewichtszeitspanne, Ionen entlang der Achse basierend auf ihrer Ionenmobilität in Gleichgewichtspositionen getrennt werden, in denen die Kraft, die durch das elektrische Feld angelegt wird, die Widerstandskraft, die durch die Gasströmung angelegt wird, ausgleicht; und
während der Ausstoßzeitspanne Ionen durch das zweite elektrische Feld aus dem zweiten Ende (512) derart ausgetrieben werden, dass die Trennung, die während der Einfangs- und Gleichgewichtszeitspanne erreicht wird, aufrechterhalten wird.

2. Ionenmobilitätsvorrichtung (500) nach Anspruch 1, wobei die Gasströmung während der Einfangs- und Gleichgewichtszeitspanne und der Ausstoßzeitspanne konstant ist.

3. Ionenmobilitätsvorrichtung (500) nach einem der vorstehenden Ansprüche, wobei mindestens eine Teilmenge der Vielzahl von Elektroden (502) in der Richtung von dem zweiten Ende (512) zu dem ersten Ende (508) eine abnehmende Länge oder einen abnehmenden Durchmesser aufweist.

4. Massenspektrometer (100), umfassend:
eine Ionenquelle (102), die konfiguriert ist, um eine Probe zu ionisieren, um Ionen zu erzeugen;
eine Ionenmobilitätsvorrichtung (500) nach einem der vorstehenden Ansprüche; und
einen Massenanalysator (106), der konfiguriert ist, um die Ionen zu analysieren.

5. Verfahren, umfassend:
Bereitstellen von Ionen an ein erstes Ende (508) einer Ionenmobilitätsvorrichtung (500), wobei die Ionenmobilitätsvorrichtung eine Vielzahl von Elektroden (502) einschließt, die entlang einer Achse (504) angeordnet sind, wobei sich die Achse (504) von einem ersten Ende (508) zu einem zweiten Ende (512) erstreckt;
Bereitstellen einer Gasströmung in der Nähe des zweiten Endes (512) der Ionenmobilitätsvorrichtung der Vielzahl von Elektroden (502), wobei die Vielzahl von Elektroden (502) einen Kanal (514) bildet, der einen Querschnitt aufweist, der von dem zweiten Ende (512) zu dem ersten Ende (508) zunimmt, um eine Ausdehnung der Gasströmung von dem zweiten Ende (512) zu dem ersten Ende (508) bereitzustellen, sodass eine Gasströmungsgeschwindigkeit von dem zweiten Ende (512) zu dem ersten Ende (508) abnimmt;
Anlegen eines elektrischen Feldes mit einer ersten Stärke in einer Richtung entgegengesetzt zu der Gasströmung, wobei das elektrische Feld entlang der Achse gleichmäßig ist (504);
Trennen von Ionen in Gleichgewichtspositionen entlang der Achse (504) basierend auf ihrer Ionenmobilität, wobei die Gleichgewichtspositionen dort liegen, wo die Kraft, die durch das elektrische Feld angelegt wird, die Widerstandskraft, die durch die Gasströmung angelegt wird, ausgleicht;
Ausstoßen von Ionen aus dem zweiten Ende durch Erhöhen des elektrischen Felds auf eine zweite Größe.

6. Verfahren nach Anspruch 5, ferner umfassend das Ionisieren einer Probe, um die Ionen herzustellen.

7. Verfahren nach Anspruch 5 oder 6, ferner umfassend das Analysieren der Ionen, nachdem die Ionen ausgestoßen werden.

8. Verfahren nach einem der Ansprüche 5 bis 7, wobei mindestens eine Teilmenge der Vielzahl von Elektroden (502) in der Richtung von dem zweiten Ende (512) zu dem ersten Ende (508) eine abnehmende Länge oder einen abnehmenden Durchmesser aufweist.

## Revendications

1. Dispositif de mobilité ionique (500) ayant une première extrémité (508) permettant de recevoir des ions et une seconde extrémité (512) permettant d'éjecter des ions, le dispositif de mobilité ionique comprenant :
une alimentation d'écoulement gazeux configurée pour fournir un écoulement gazeux près de la seconde extrémité ;
une pluralité d'électrodes (502) agencées le long d'un axe (504), l'axe s'étendant de la première extrémité (508) à la seconde extrémité (512), la pluralité d'électrodes (502) étant conçues pour recevoir l'écoulement gazeux près de la seconde extrémité, dans lequel la pluralité d'électrodes forment un canal (514) ayant une section transversale qui augmente de la seconde extrémité (512) à la première extrémité (508) pour assurer une détente de l'écoulement gazeux de la seconde extrémité (512) à la première extrémité (508) de telle sorte qu'une première vitesse de gaz au niveau de la seconde extrémité est supérieure à une seconde vitesse de gaz au niveau de la première extrémité (508) ;
une source de courant configurée pour :
appliquer un premier potentiel à la pluralité d'électrodes (502) pour générer un premier champ électrique pendant un laps de temps de piégeage et d'équilibrage, le premier champ électrique étant uniforme le long de la longueur de l'axe (504) ;
appliquer un second potentiel aux électrodes (502) pendant un laps de temps d'éjection pour générer un second champ électrique, le second champ électrique étant uniforme le long de la longueur de l'axe (504) de la première extrémité (508) à la seconde extrémité (512) et étant supérieur au premier champ électrique ;
de telle sorte que, lors de l'utilisation, pendant le laps de temps de piégeage et d'équilibrage, des ions sont séparés le long de l'axe en fonction de leur mobilité ionique jusqu'à des positions d'équilibre où la force appliquée par le champ électrique compense la force résistante appliquée par l'écoulement gazeux ; et
pendant le laps de temps d'éjection, des ions sont chassés de la seconde extrémité (512) par le second champ électrique de telle sorte que la séparation obtenue pendant le laps de temps de piégeage et d'équilibrage est maintenue.

2. Dispositif de mobilité ionique (500) selon la revendication 1 dans lequel l'écoulement gazeux est constant pendant le laps de temps de piégeage et d'équilibrage et le laps de temps d'éjection.

3. Dispositif de mobilité ionique (500) selon l'une quelconque revendication précédente, dans lequel au moins un sous-ensemble de la pluralité d'électrodes (502) ont une longueur ou un diamètre qui diminue dans la direction allant de la seconde extrémité (512) à la première extrémité (508).

4. Spectromètre de masse (100) comprenant :
une source d'ions (102) configurée pour ioniser un échantillon pour produire des ions ;
le dispositif de mobilité ionique (500) selon l'une quelconque des revendications précédentes ; et
un analyseur de masse (106) configuré pour analyser les ions.

5. Procédé comprenant :
la fourniture d'ions à une première extrémité (508) d'un dispositif de mobilité ionique (500), le dispositif de mobilité ionique comportant une pluralité d'électrodes (502) agencées le long d'un axe (504), l'axe (504) s'étendant d'une première extrémité (508) à une seconde extrémité (512) ;
la fourniture d'un écoulement gazeux près de la seconde extrémité (512) du dispositif de mobilité ionique, la pluralité d'électrodes (502), dans lequel la pluralité d'électrodes (502) forme un canal (514) ayant une section transversale qui augmente de la seconde extrémité (512) à la première extrémité (508) pour assurer une détente de l'écoulement gazeux de la seconde extrémité (512) à la première extrémité (508) de telle sorte qu'une vitesse d'écoulement gazeux diminue de la seconde extrémité (512) à la première extrémité (508) ;
l'application d'un champ électrique à une première grandeur dans une direction contraire à l'écoulement gazeux, le champ électrique étant uniforme le long de l'axe (504) ;
la séparation d'ions à des positions d'équilibre le long de l'axe (504) en fonction de leur mobilité ionique, les positions d'équilibre étant celles où la force appliquée par le champ électrique compense la force résistante appliquée par l'écoulement gazeux ;
l'éjection d'ions à partir de la seconde extrémité en augmentant le champ électrique à une seconde grandeur.

6. Procédé selon la revendication 5, comprenant en outre l'ionisation d'un échantillon pour produire les ions.

7. Procédé selon la revendication 5 ou la revendication 6, comprenant en outre l'analyse des ions après que les ions ont été éjectés.

8. Procédé selon l'une quelconque des revendications 5 à 7, dans lequel au moins un sous-ensemble de la pluralité d'électrodes (502) ont une longueur ou un diamètre qui diminue en allant dans la direction allant de la seconde extrémité (512) à la première extrémité (508).
